# EUROPÄISCHE PATENTSCHRIFT

(11) **EP 2 922 758 B1**
(45) Veröffentlichungstag und Bekanntmachung des Hinweises auf die Patenterteilung: **10.01.2018**
(21) Anmeldenummer: 13776420.5
(22) Anmeldetag: 10.10.2013
(51) Int. Cl.: B65B 35/50, B65B 57/10, B65G 47/91, B65B 5/10, B65B 57/20

(54) **VERFAHREN UND VORRICHTUNG ZUM BEFÜLLEN VON VERPACKUNGEN MIT PRODUKTEN**
METHOD AND APPARATUS FOR FILLING IN A CONTAINER WITH PRODUCTS
MÉTHODE ET APPAREIL POUR LE REMPLISSAGE DE PRODUITS DANS UN CONTENEUR

(30) Priorität: 23.11.2012 DE 102012022855
(43) Veröffentlichungstag der Anmeldung: 30.09.2015
(73) Patentinhaber: Focke & Co. (GmbH & Co. KG), 27283 Verden (DE)
(72) Erfinder: KERN, Wolfgang, 26160 Bad Zwischenahn (DE); BÖGER, Falko, 26721 Emden (DE)
(74) Vertreter: Ellberg, Nils
(86) Internationale Anmeldenummer: PCT/EP2013/003051
(87) Internationale Veröffentlichungsnummer: WO 2014/079525

(56) Entgegenhaltungen:
- EP-A1- 0 090 123
- EP-A1- 0 855 342
- WO-A1-2012/084089
- CN-A- 101 525 061
- DE-A1- 4 434 866
- DE-A1- 10 027 814
- DE-A1-102010 021 851

## Beschreibung

Die Erfindung betrifft ein Verfahren zum Befüllen von Verpackungen mit Produkten, insbesondere zum Befüllen von Kartons mit Gebindepackungen aus Zigarettenpackungen, gemäß dem Oberbegriff des Anspruchs 1.

Ferner betrifft die Erfindung eine Vorrichtung zum Befüllen von Verpackungen mit Produkten, insbesondere zum Befüllen von Kartons mit Gebindepackungen aus Zigarettenpackungen, gemäß dem Oberbegriff des Anspruchs 4.

Verfahren und Vorrichtungen der eingangs genannten Art sind aus der Praxis in unterschiedlichen Konfigurationen bekannt. Eine Lösung aus dem Bereich der Zigarettenindustrie ist in der DE 10 2004 009 584 A1 gezeigt. Demnach weist die Vorrichtung eine Kombination eines Kartonpackers mit einer Palettierstation auf, um Zigaretten-Gebindepackungen in Kartons einzuführen und diese auf Paletten abzusetzen. Die konstruktiv zusammengefassten Einheiten bilden eine gemeinsam bedienbare Gesamtvorrichtung.

CN 101 525 061 A zeigt Lösungen zur Kontrolle von Produkten der Zigarettenindustrie mit Hilfe einer CCD-Kamera.

WO 2012/084089 A1 zeigt den Einsatz von Kameras in einer Verpackungsmaschine, wobei die hergestellten Produkte mit den Kameras erfasst werden. Die Kameras sind dabei ortsfest an verschiedenen Stellen der Verpackungsmaschine angeordnet.

Hiervon ausgehend liegt der Erfindung die Aufgabe zugrunde Verfahren und Vorrichtungen der eingangs genannten Art weiterzuentwickeln, insbesondere im Hinblick auf eine verbesserte Erfassung bzw. Dokumentation des Verpackungsprozesses.

Ein Verfahren zur Lösung dieser Aufgabe weist die Merkmale des Anspruchs 1 auf.

Diese Lösung weist insbesondere den Vorteil auf, dass damit der komplette Prozess von der Gruppierung der Produkte bis zur Verbringung in die Verpackung dokumentiert wird. Damit kann der Verpackungsprozess gut überwacht und insbesondere garantiert werden, dass sich die vorgesehene Anzahl von Produkten tatsächlich in der Verpackung befindet. Damit kann auch eine Manipulation des Verpackungsinhalts während des Verpackungsprozesses vermieden werden. Die Dokumentation des Verpackungsprozesses kann auch gegenüber Abnehmern als Nachweis dafür benutzt werden, dass die Verpackungen ordnungsgemäß befüllt wurden. Vorzugsweise kommt die erfindungsgemäße Lösung im Rahmen eines "Track and Trace"-Systems zum Einsatz.

Gemäß einer bevorzugten Ausgestaltung der erfindungsgemäßen Lösung ist vorgesehen, dass die Vollständigkeit der Produktgruppe im Bereich der Handhabungseinrichtung geprüft wird, wobei das Vorhandensein einzelner Produkte innerhalb der Produktgruppe durch sowohl pneumatisch arbeitende Mittel als auch durch mechanisch arbeitende Mittel geprüft wird.

Auf diese Weise kann zuverlässig überprüft werden, ob die Produktgruppe komplett ist. Diese Lösung hat gegenüber rein pneumatisch arbeitenden Systemen den Vorteil, dass die mechanisch arbeitenden Prüforgane nicht durch Verpackungsmaterialien getäuscht werden, wodurch sich die Zuverlässigkeit der Prüfung verbessert.

Gemäß einem bevorzugten Ausführungsbeispiel der Erfindung ist vorgesehen, dass die pneumatisch arbeitenden Mittel und die mechanisch arbeitenden Mittel der Handhabungseinrichtung zugeordnet sind, wobei zwecks pneumatischer Kontrolle des Vorhandenseins jedes Produkts innerhalb der Produktgruppe dieses über eine Unterdruckquelle mit einem Unterdruck beaufschlagt wird, wobei der Unterdruck durch ein poröses Material jeweils auf die Produkte ausgeübt wird.

Durch die Erzeugung des Unterdrucks durch das poröse Material hindurch ist es möglich das Vakuum auf eine größere Fläche zu verteilen, wodurch die Produkte schonender behandelt werden als üblich.

Weitere Einzelheiten und bevorzugte Ausgestaltungen des erfindungsgemäßen Verfahrens sind den Unteransprüchen und der Beschreibung eines bevorzugten Ausführungsbeispiels zu entnehmen.

Eine Vorrichtung zur Lösung der eingangs genannten Aufgabe weist die Merkmale des Anspruchs 4 auf.

Diese Lösung weist insbesondere die eingangs genannten Vorteile auf.

Vorzugsweise ist vorgesehen, dass die insbesondere erste Kontrolleinrichtung der Handhabungseinrichtung zugeordnet ist, wobei die Handhabungseinrichtung sowohl pneumatisch arbeitende Mittel als auch mechanisch arbeitende Mittel zur Prüfung der Vollständigkeit der Produktgruppe aufweist.

Die sich hieraus ergebenden Vorteile wurden bereits eingangs erwähnt.

Weiterhin kann in einem bevorzugten Ausführungsbeispiel vorgesehen sein, dass die Handhabungseinrichtung durch einen Roboter gebildet ist, wobei der Roboter einen Kopf zum Handhaben der Produktgruppen bzw. Gruppen aufweist und die pneumatisch arbeitenden Mittel und die mechanisch arbeitenden Mittel dem Kopf zugeordnet sind.

Eine weitere Besonderheit kann darin bestehen, dass die pneumatisch arbeitenden Mittel zur Übertragung eines Unterdrucks auf die Produktgruppe ausgebildet sind, wobei der Unterdruck durch ein im Bereich des Kopfes angeordnetes poröses Material auf die Produktgruppe ausgeübt wird.

Auch die sich hierdurch insbesondere ergebenden Vorteile sind eingangs bereits erwähnt worden.

Weitere Einzelheiten und bevorzugte Ausgestaltungen der erfindungsgemäßen Vorrichtung sind den Unteransprüchen und der Beschreibung eines bevorzugten Ausführungsbeispiels zu entnehmen. Diesbezüglich wird auf die beigefügten Zeichnungen verwiesen. Darin zeigt:

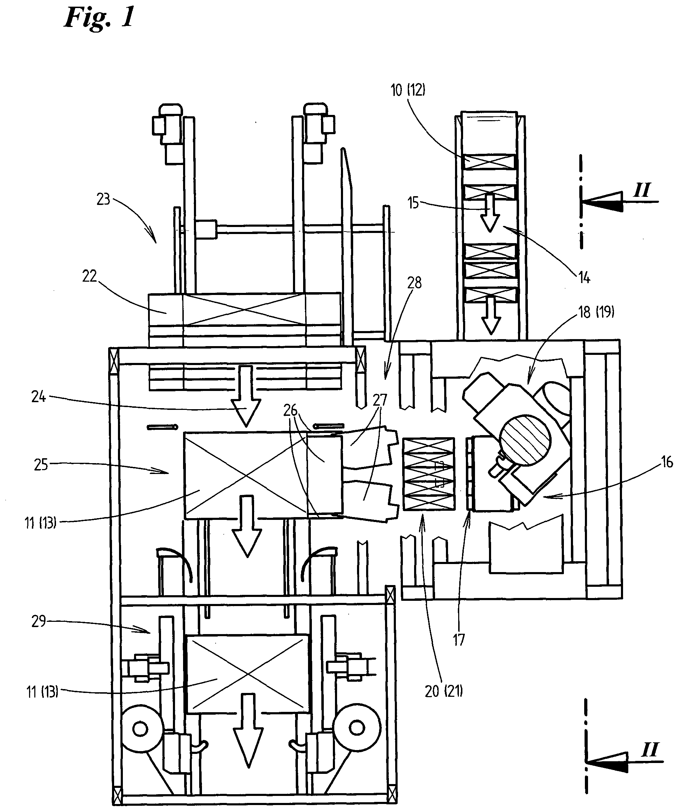

- Fig. 1: eine Draufsicht auf eine Verpackungsanlage für Gebindepackungen aus Zigarettenpackungen,

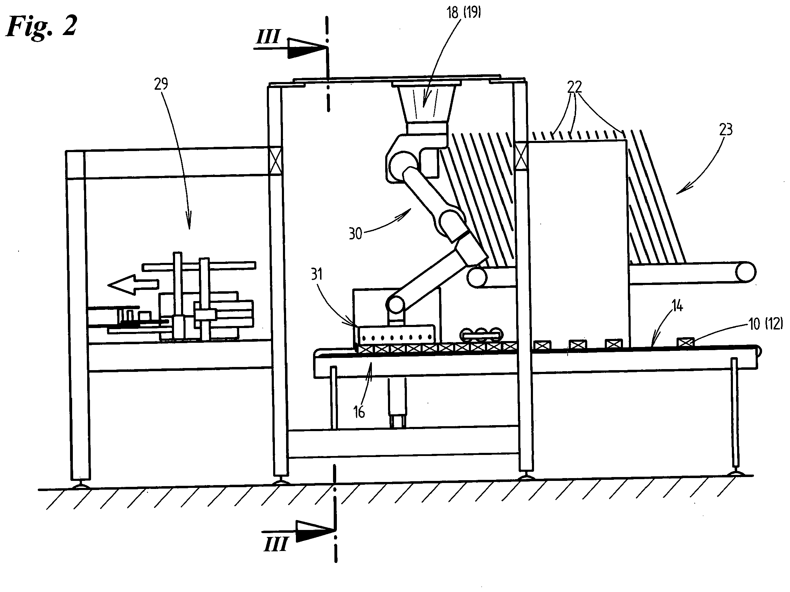

- Fig. 2: einen Vertikalschnitt durch die Vorrichtung entlang Schnittlinie II - II in Fig. 1,

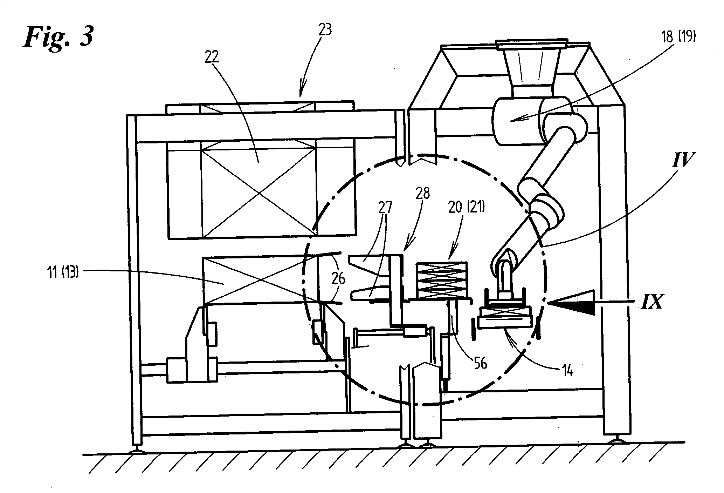

- Fig. 3: einen Vertikalschnitt durch die Vorrichtung entlang Schnittlinie III - III in Fig. 2,
- Fig. 4 bis 6: eine Einzelheit der Vorrichtung im Bereich IV in Fig. 3 während verschiedener Phasen des Verpackungsvorganges,
- Fig. 7: eine alternative nicht zur Erfindung gehörende Lösung zur Darstellung in Fig. 4 bis 6,
- Fig. 8: eine weitere nicht zur Erfindung gehörende alternative Lösung zur Darstellung gemäß Fig. 4 bis 7,
- Fig. 9: eine Seitenansicht der Vorrichtung entsprechend Pfeil IX in Fig. 3,
- Fig. 10: einen Vertikalschnitt durch die Vorrichtung entlang Schnittlinie X - X in Fig. 9,
- Fig. 11: ein Kontrollorgan der Vorrichtung,
- Fig. 12: einen Horizontalschnitt durch die Vorrichtung entlang Schnittlinie XII - XII in Fig. 10 gemäß einer nicht erfindungsgemäßen Ausführungsform.
- Fig. 13: einen Vertikalschnitt durch eine nicht erfindungsgemäße Vorrichtung beim Erfassen von Produktgruppen,
- Fig. 14: eine Seitenansicht der Vorrichtung entsprechend Pfeil XIV in Fig. 13, und
- Fig. 15: einen Schnitt durch die Vorrichtung entlang Schnittlinie XV - XV in Fig. 14.

Die Erfindung wird nachfolgend anhang einer Vorrichtung zum Verpacken von Produkten 10 in eine Verpackung 11 beschrieben. Im gezeigten Beispiel handelt es sich um eine Vorrichtung zum Verpacken von Zigarettenstangen 12 in einen Karton 13. Da es sich aber nicht zwangsläufig um Zigarettenstangen 12 handeln muss, die in einen Karton 13 verpackt werden, wird im Weiteren nur der Begriff Produkt 10 bzw. Verpackung 11 benutzt.

Die Produkte 10 werden auf einem Förderer 14 in einer ersten Transportrichtung gemäß Pfeil 15 einer Gruppierstation 16 zugeführt und dort zu einer Produktgruppe 17 aus Produkten 10 zusammengestellt.

In der Gruppierstation 16 ist ferner eine Handhabungseinrichtung 18, insbesondere in Form eines Roboters 19 vorgesehen. Die Handhabungseinrichtung 18 dient dazu die Vollständigkeit der Produktgruppe 17 zu prüfen.

Danach wird aus mehreren Produktgruppen 17 ein Stapel 20 aus einer Gruppe 21 von Produktgruppen 17 gebildet und vorzugsweise quer zur ersten Transportrichtung gemäß Pfeil 15 in die Verpackung 11 überführt.

Zuschnitte 22 für die Verpackung 11 werden in einem Magazin 23 bereitgehalten und in einer zweiten Transportrichtung gemäß Pfeil 24 entnommen und aufgerichtet. In einer Einfüllstation 25 werden dann die Verpackungen 11 zur Einführung einer oder mehrerer Gruppen 21 aus Produktgruppen 17 bereitgehalten, beispielsweise als einseitig geöffneter Karton 13, wobei Faltlappen 26 mittels Organen 27 einer Einführeinrichtung 28 offen gehalten werden, um die Produkte 10 in die Verpackung 11 einführen zu können.

Nach dem Befüllen der Verpackung 11 wird diese in Richtung von Pfeil 24 in den Bereich einer Verschließstation 29 transportiert und verschlossen.

Weitere Einzelheiten der Handhabung der Verpackungen 11 sind auch der DE 10 2004 009 584 A1 zu entnehmen, auf die zum Zwecke einer vollständigen Offenbarung verwiesen wird.

Eine erste Besonderheit besteht darin, dass die Handhabungseinrichtung 18 bzw. der Roboter 19 einen Arm 30 mit einem Kopf 31 aufweist, wobei der Kopf 31 vorzugsweise am Ende des Arms 30 angeordnet ist. Der Arm 30 ist vorzugsweise mehrgliedrig ausgebildet, wobei die einzelnen Glieder gelenkig miteinander verbunden sind und wobei auch der Kopf 31 gelenkig am Arm 30 angeordnet ist, sodass der Kopf 31 zum Handhaben der Produkte 10 in alle Richtungen bewegt und auch gedreht werden kann.

Die Handhabungseinrichtung 18 verfügt über eine (erste) Kontrolleinrichtung 32 zur Prüfung der Vollständigkeit der auf dem Förderer 14 gebildeten Produktgruppe 17. Im vorliegenden Fall ist die Kontrolleinrichtung 32 dem Kopf 31 des Roboters 19 zugeordnet bzw. in diesem angeordnet. Es ist aber auch denkbar, dass die Kontrolleinrichtung 32 nicht der Handhabungseinrichtung 18 bzw. dem Roboter 19 angeordnet ist, sondern anderen Organen der Vorrichtung.

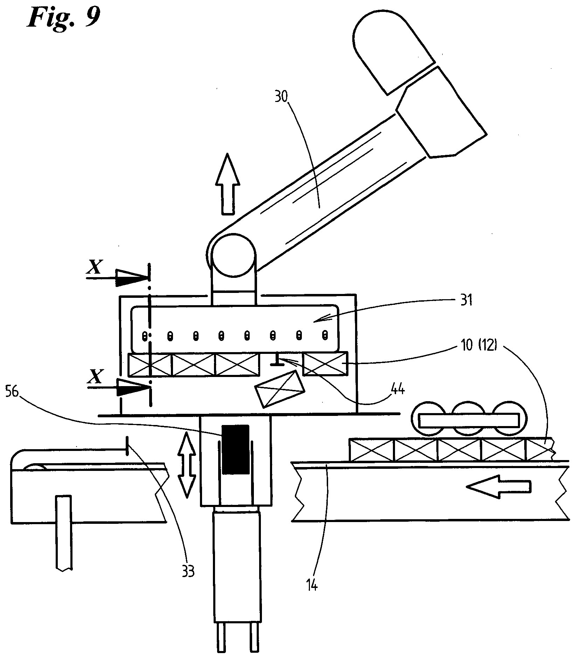

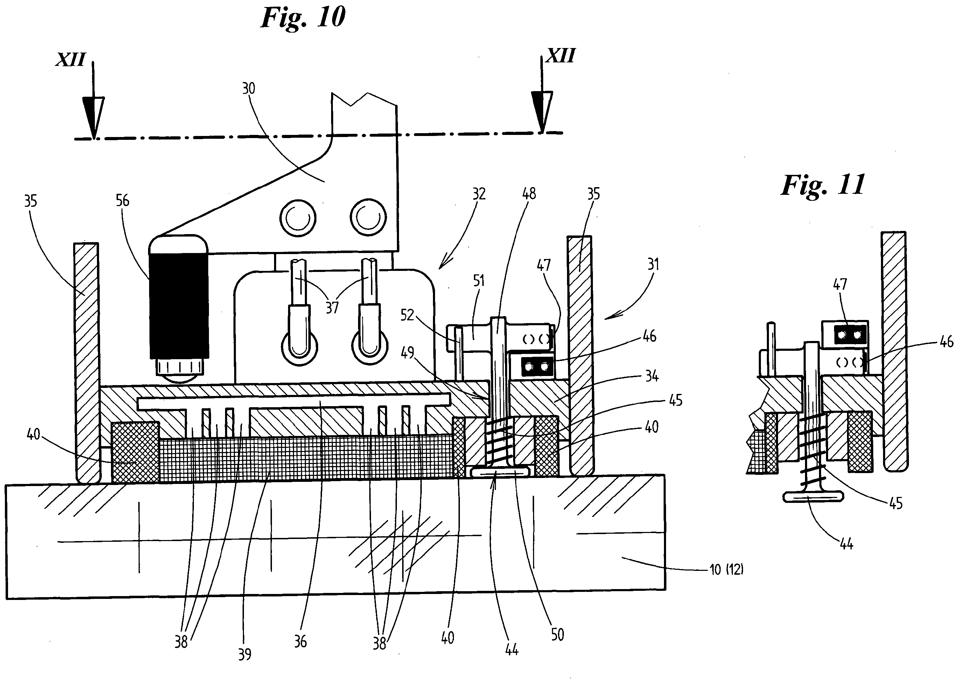

Die Einzelheiten der Kontrolleinrichtung ergeben sich aus den Fig. 9 bis 15:
Die Bildung der Produktgruppe 17 auf dem Förderer 14 erfolgt im gezeigten Ausführungsbeispiel durch Aufstauen der Produkte 10 hinter einem Anschlag 33 im Bereich des Förderers 14. Die Produktgruppe 17 besteht im vorliegenden Fall aus fünf Zigarettenstangen 12. Denkbar ist natürlich auch eine andere Konfiguration der Produktgruppe 17. Die Zigarettenstangen 12 bestehen im vorliegenden Fall aus Zigarettenpackungen, die in zwei Reihen zu je fünf Packungen angeordnet sind (Fig. 11). Auch hier sind andere Konfigurationen denkbar.

Die erste Kontrolleinrichtung 32 dient zur Prüfung der Vollständigkeit der Produktgruppe 17 und verfügt sowohl über mechanisch arbeitende Mittel als auch über pneumatisch arbeitende Mittel. Im vorliegenden Fall ist jedem Produkt 10 innerhalb der Produktgruppe 17 sowohl ein mechanisches Mittel als auch ein pneumatisches Mittel zugeordnet. Gegebenenfalls können aber auch mehr als ein pneumatisches Mittel und/oder mechanisches Mittel je Produkt 10 vorgesehen sein. Gegebenenfalls ist es auch denkbar, dass mit einer geringeren Anzahl an Mitteln mehrere Produkte 10 gleichzeitig geprüft werden.

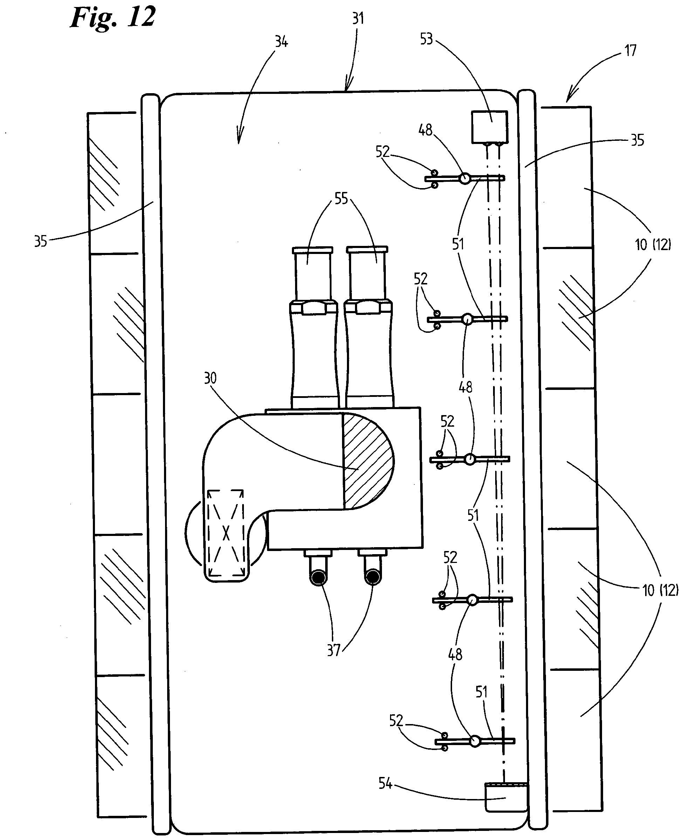

Der Kopf 31 erstreckt sich über einen Großteil der Produktgruppe 17 (Fig. 12) und verfügt über eine zentrale Grundplatte 34 sowie seitliche Wangen 35 im Bereich der Längsseiten der Grundplatte 34. Die Abmessungen des Kopfes 31 und damit der Grundplatte 34 sowie der Wangen 35 ist formatabhängig, d.h. von den Abmessungen der jeweiligen Produktgruppe 17. Daher kann der Kopf 31 vom Arm 30 gelöst werden, um die Vorrichtung an andere Formate anzupassen.

In der Grundplatte 31 sind Unterdruckkanäle 36 ausgebildet, die mit einer nicht gezeigten Unterdruckquelle über Pneumatikzuleitungen 37 in Verbindung stehen. Die Unterdruckkanäle 36 münden mit vorzugsweise mehreren Stichkanälen 38 im Bereich einer Unterseite der Grundplatte 34 und dienen zum Ansaugen der Produktgruppe 17 bzw. der einzelnen Produkte 10 der Produktgruppe 17.

Vorzugsweise ist vorgesehen, dass jedes Produkt 10 innerhalb der Produktgruppe 17 über mehrere Stichkanäle 38 mit einem Unterdruck beaufschlagt und auf diese Weise am Kopf 31 gehalten wird.

Über nicht gezeigte Sensoren wird geprüft, ob der Unterdruck im Bereich von allen Produkten 10 der Produktgruppe 17 anliegt. Fehlen ein oder mehrere Produkte 10, so kann dies entsprechend detektiert werden.

Die Sensoren bilden somit zusammen mit den Stichkanälen 38 die pneumatisch arbeitenden Mittel der Kontrolleinrichtung 32.

Eine weitere Besonderheit besteht darin, dass die Produkte 10 nicht unmittelbar durch die Stichkanäle 38 mit einem Unterdruck beaufschlagt werden, sondern durch ein oder mehrere poröse Ansaugelemente 39 hindurch. Auf diese Weise wird der Unterdruck auf eine größere Fläche verteilt, was zu einer produktschonenderen Handhabung führt.

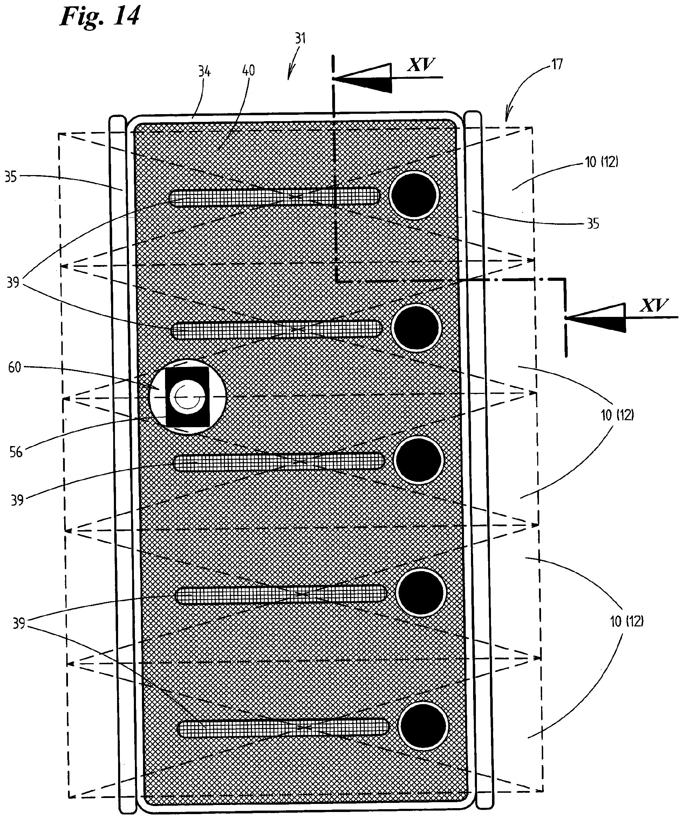

Im gezeigten Ausführungsbeispiel sind die Ansaugelemente 39 jeweils längliche Gebilde, die derart unterhalb der Grundplatte 34 angeordnet sind, dass sie etwa in Längsmitte und in Quermitte der jeweiligen Produkte 10 angeordnet sind (Fig. 14). Umgeben sind die Ansaugelemente 39 jeweils von einem oder mehreren elastischen Dichtkörpern 40. Im vorliegenden Fall handelt es sich um einen einteiligen Dichtkörper 40, der sich über fast die gesamte Unterseite der Grundplatte 34 erstreckt und der Aussparungen für die jeweiligen Ansaugelemente 39 aufweist.

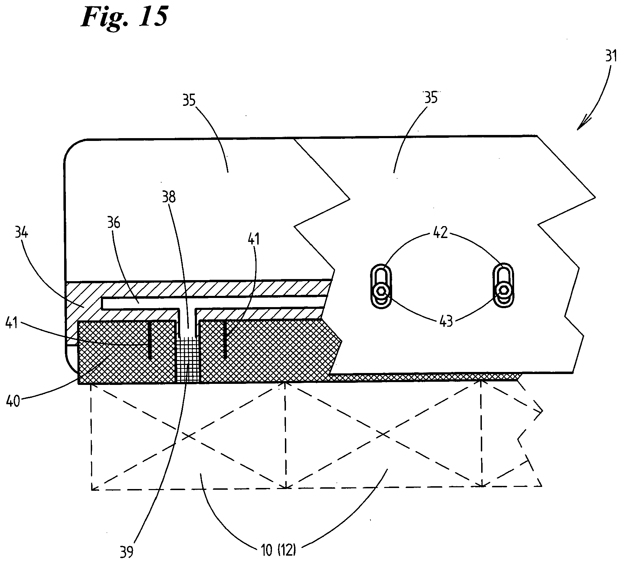

Ein weiteres vorteilhaftes Detail ist in Fig. 15 gezeigt. Demnach sind mit geringen seitlichen Abständen zum Ansaugelement 39 Aussteifungselemente 41 im Dichtkörper 40 angeordnet. Die Aussteifungselemente 41 dienen zur Versteifung des Dichtkörpers 40 im Bereich der Ansaugelemente 39 und erstrecken sich ausgehend von einer Oberseite des Dichtkörpers 40 bis etwas über die halbe Höhe des Dichtkörpers 40 hinaus in Richtung einer Unterseite des Dichtkörpers 40. Bei dem Aussteifungselement 41 kann es sich beispielsweise um ein oder mehrere Stegbleche oder dergleichen handeln. Die Stegbleche können die Ansaugelemente 39 umgeben oder nur bereichsweise angeordnet sein, beispielsweise im Bereich der Längsseiten.

Weiterhin ergibt sich aus Fig. 15, dass die Wangen 35 hinsichtlich ihrer Lage an der Grundplatte 34 verstellbar sind, nämlich hinsichtlich der Höhe. Zu diesem Zweck weisen die Wangen 35 in Abständen Langlöcher 42 auf, durch die Befestigungsmittel 43 in die Grundplatte 34 eingreifen.

Nachfolgend werden die mechanisch arbeitenden Mittel der Kontrolleinrichtung 32 beschrieben:
In der Grundplatte 34 sind jeweils Stößel 44 angeordnet, die mittels einer Feder 45 vorgespannt sind und die von oben auf die Produkte 10 drücken. Die Kraft der Feder 45 ist dabei jeweils geringer als die Haltekraft, die mittels Unterdruck auf die Produkte 10 ausgeübt wird.

Fehlt ein Produkt 10 (wie in Fig. 9 angedeutet), so kann der Stößel 44 durch die Feder 45 nach unten gedrückt werden, wodurch ein Sensor 46 geschlossen wird und somit das Fehlen eines Produkts 10 erkannt wird (Fig. 11). Bei vorhandenem Produkt 10 befindet sich der Stößel 44 hingegen in einer oberen Stellung, wodurch ein weiterer Sensor 47 betätigt wird. Auf diese Weise kann geprüft werden, ob der Stößel 44 korrekt arbeitet und sich nicht festgesetzt hat.

Wie insbesondere Fig. 12 und 14 zeigen, ist jedem Produkt 10 ein eigener Stößel 44 zugeordnet.

Im vorliegenden Ausführungsbeispiel ist der Stößel 44 in Art eines Ventils ausgebildet und weist einen zentralen Schaft 48 auf, der durch eine Bohrung 49 der Grundplatte 34 geführt ist und an dem unterseitig ein Teller 50 angeordnet ist.

Die Feder 45 stützt sich an der Rückseite des Tellers 50 und an der Unterseite der Grundplatte 34 ab.

Im Bereich des oberen Endes des Schafts 48 ist ein quergerichtetes Betätigungsmittel 51 vorgesehen, welches seitlich in den Bereich der Sensoren 46, 47 ragt, die im vorliegenden Fall als Lichtschranken ausgebildet sind.

Weiterhin dient das quergerichtete Betätigungsmittel 51 auch zur Ausrichtung der Stößel 44. Zu diesem Zweck wird das Betätigungsmittel 51 in einer Führung 52 gehalten um ein Verdrehen des Stößels 44 zu vermeiden.

Die Lichtschranke ist im vorliegenden Fall als Reflexlichtschranke 53 ausgebildet, die mit einer Reflektorfläche 54 zusammenwirkt (Fig. 12).

Weiterhin sind in Fig. 12 auch Ejektoren 55 gezeigt zur Erzeugung des Vakuums bzw. Unterdrucks.

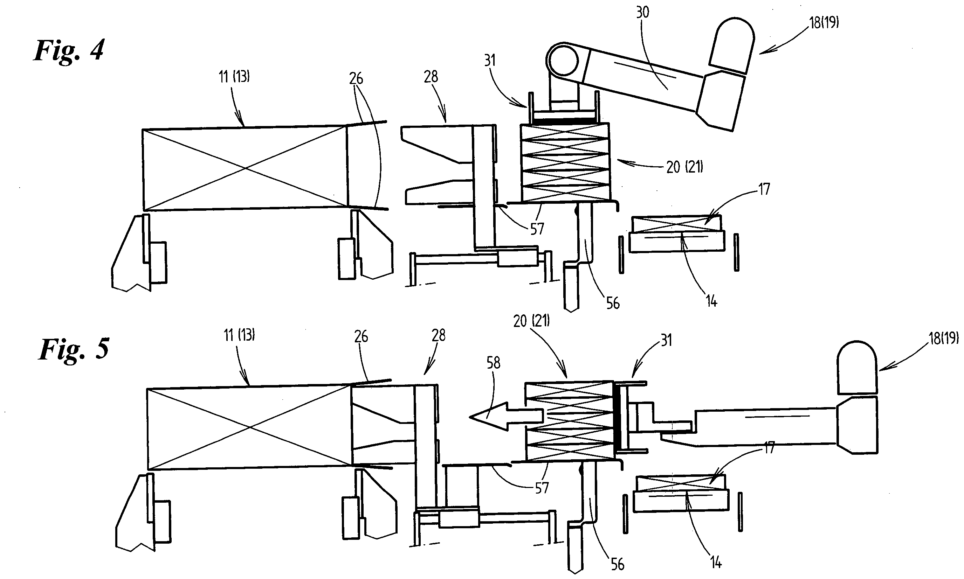

Eine weitere Besonderheit hinsichtlich einer (zweiten) Kontrolleinrichtung 56 wird nachfolgend anhand der Fig. 4 bis 8 und 13 beschrieben:
Fig. 4 bis 6 zeigen eine erste, erfindungsgemäße Variante des Einsatzes der zweiten Kontrolleinrichtung 56. Demnach werden die Produktgruppen 17 mittels der Handhabungseinrichtung 18 vom Förderer 14 abgehoben und zu einem Stapel 20 bzw. einer Gruppe 21 von Produktgruppen 17 zusammengestellt (Fig. 4).

Nachdem die Gruppe 21 komplettiert ist, wird diese mittels der Handhabungseinrichtung 18 entlang einer Transportbahn 57 durch die Einführeinrichtung 28 hindurch in die offene Verpackung 11 geschoben.

Der Abschub der Gruppe 21 erfolgt vorzugsweise durch den Kopf 31 des Roboters 19, welcher die Gruppe 21 seitlich abschiebt. Der Abschub erfolgt dabei quer zur Transportrichtung auf dem Förderer 14 entsprechend Pfeil 58.

Zum Einführen der Gruppe 21 in die Verpackung 11 wird die Einführeinrichtung 28 teilweise in die offene Verpackung 11 eingeführt, sodass Faltlappen 26 der Verpackung 11 offen gehalten werden und wobei die Einführeinrichtung 28 auch den Abstand zwischen einem Ende der Transportwand 27 und der Verpackung 11 überbrückt.

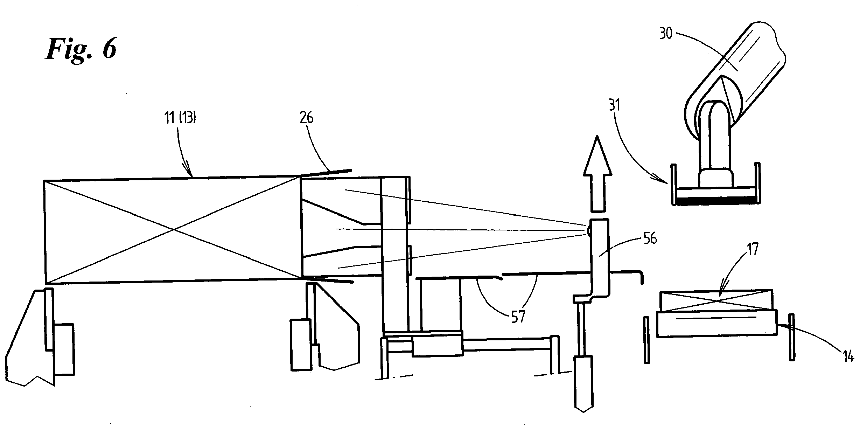

Nach dem Einführen der Gruppe 21 in die Verpackung 11 wird die Handhabungseinrichtung 18 aus dem Transportweg der Gruppen 21 herausgezogen, sodass der Inhalt der Verpackung 11 erfasst werden kann. Zu diesem Zweck wird die zweite Kontrolleinrichtung 56, beispielsweise in Form einer Kamera, aus einer Wartestellung unterhalb der Transportbahn 57 (Fig. 4 und 5) in eine Erfassungsstellung oberhalb der Transportbahn 57 (Fig. 6) bewegt und der Inhalt der Verpackung 11 erfasst, beispielsweise durch Aufnahme eines Fotos der geöffneten Verpackung 11. Danach wird die Kontrolleinrichtung 56 in die Ausgangsstellung zurückbewegt, nämlich in die Wartestellung.

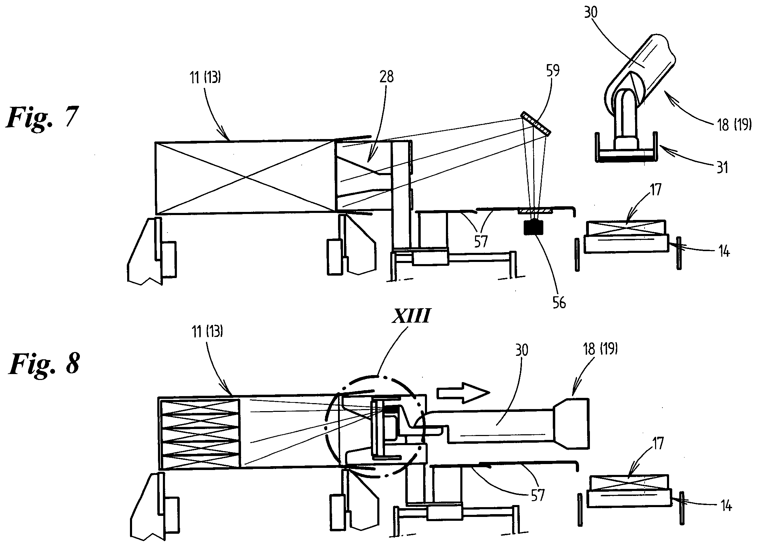

Fig. 7 zeigt eine alternative, nicht zur Erfindung gehörende Lösung, bei der die zweite Kontrolleinrichtung 56 ortsfest unterhalb der Transportbahn 57 angeordnet ist. Durch eine Ausnehmung in der Transportbahn 57 oberhalb der Kontrolleinrichtung 56 (die gegebenenfalls mit einer Glasscheibe gefüllt sein kann) wird über einen oberhalb der Transportbahn 57 angeordneten Reflektor 59, beispielsweise einen Spiegel, der Inhalt der Verpackung 11 erfasst.

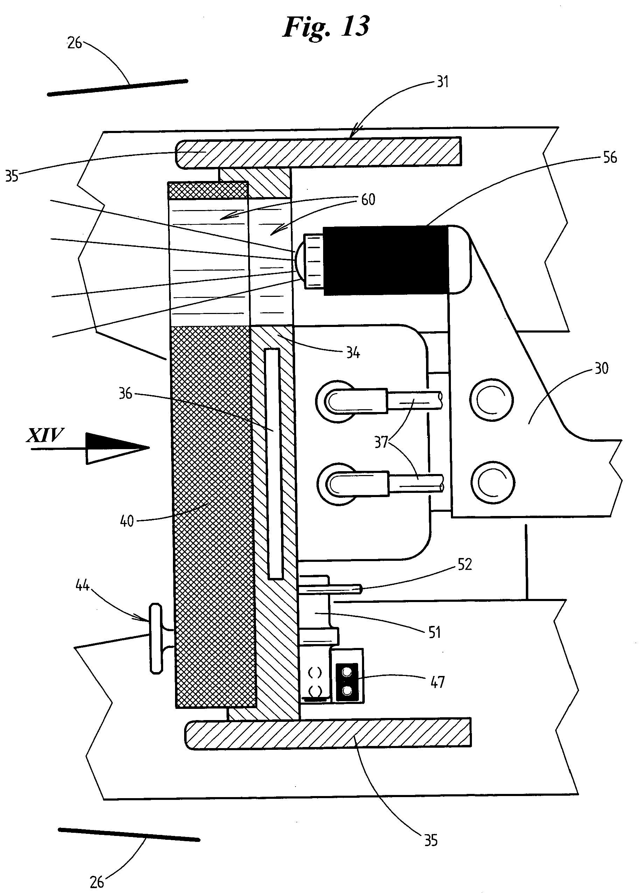

Eine dritte, nicht zur Erfindung gehörende Variante ist in Fig. 8 und 13 gezeigt. Dabei ist die Kontrolleinrichtung 56, beispielsweise eine Kamera, am Arm 30 der Handhabungseinrichtung 18 angeordnet, nämlich im Bereich des Kopfes 31. Die Erfassung des Inhalts der Verpackung 11 erfolgt dabei durch eine Ausnehmung 60 in der Grundplatte 34 und im Dichtkörper 40 hindurch, vorzugsweise beim Zurückziehen des Arms 30 aus der Verpackung 11 (Fig. 8).

Mit Hilfe der beiden Kontrolleinrichtungen 32, 56 kann der Verpackungsprozess komplett überwacht werden, nämlich ausgehend von der Bildung der Produktgruppen 17 bis zur Einführung der Gruppen 21 aus Produktgruppen 17 in die Verpackung 11. Sind mehrere Gruppen 21 in die Verpackung 11 einzuführen, so wird der Prozess der Bildung der Gruppe 21 und des Abschiebens mit nachfolgender Erfassung wiederholt bis die Sollmenge an Produkten 10 sich in der Verpackung 11 befindet. Auf diese Weise kann beispielsweise gegenüber einem Kunden der Nachweis erbracht werden, dass die Verpackung 11 ordnungsgemäß mit Produkten 10 befüllt wurde. Weiterhin ermöglicht diese Lösung insbesondere den Nachweis, dass jede Gruppe 21 ordnungsgemäß und Vollständig in die Verpackung 11 eingefüllt wurde. Es kann damit auch der Nachweis erbracht werden, dass sich innerhalb eine größeren Verpackung 11 nur ordnungsgemäße Produkte 10 befinde. Die erfindungsgemäße Lösung ermöglicht damit einen lückenlosen Nachweis auch dann wenn sich die nacheinander eingefüllten Gruppen 21 teilweise oder komplett verdecken.

Weiterhin kann im Zuge eines "Track and Trace"-Systems dafür gesorgt werden, dass die erfassten Bilder der Kameras den Produkten 10 bzw. der Verpackung 11 zugeordnet werden.

Ferner kann auf geeignete Weise dafür Sorge getragen werden, dass nach dem Fotografieren des Verpackungsinhalts es nicht mehr möglich ist in den Verpackungsprozess einzugreifen und gegebenenfalls Produkte 10 zu entnehmen. Wird dies doch getan, beispielsweise um eine Störung zu beseitigen, wird die Verpackung 11 entsprechend gekennzeichnet und kann dann gegebenenfalls für den weiteren Verpackungsprozess nicht mehr zur Verfügung stehen. Gemäß einer nicht erfindungsgemäßen Ausführungsform ist weiterhin denkbar, dass die zweite Kontrolleinrichtung 56 dazu benutzt wird, um sowohl die Produktgruppen 17 als auch die Gruppen 21 zu erfassen. Damit könnte auf die erste Kontrolleinrichtung 32 verzichtet werden. Die zweite Kontrolleinrichtung 56 könnte im Kopf 31 angeordnet sein, wie gezeigt, und die Produktgruppe 17 beispielsweise auf dem Förderer 14 erfassen.

Darüber hinaus ist es nicht zwingend erforderlich, dass mehrere Gruppen 21 in die Verpackung 11 eingeführt werden. Der Packungsinhalt kann auch nur aus einer Gruppe 21 bestehen.

Weiterhin sind auch nicht erfindungsgemäße Fälle vorstellbar, in denen auf das Bilden von Produktgruppen 17 verzichtet wird und demnach die Produkte 10 direkt oder nach Bildung eines Stapels 20 in die Verpackung 11 transportiert werden.

Selbstverständlich muss es sich bei den Produkten 10 nicht um Zigarettenstangen 12 oder Gebindepackungen handeln. Als Produkte 10 kommen auch Zigarettenpackungen oder andere Gegenstände in Frage.

## Patentansprüche

1. Verfahren zum Befüllen von Verpackungen (11) mit Produkten (10), insbesondere zum Befüllen von Kartons (13) mit Gebindepackungen (12) aus Zigarettenpackungen, wobei mehrere Produkte (10) zu einer Produktgruppe (17) zusammengestellt werden und die Vollständigkeit der Produktgruppe (17) durch eine erste Kontrolleinrichtung (32) außerhalb der Verpackung (11) erfasst wird, und wobei mehrere Produktgruppen (17) mittels einer Handhabungseinrichtung (18) zu einer Gruppe (21) von Produktgruppen (17) zusammengestellt und in die Verpackung (11) eingeführt werden, wobei das Vorhandensein der Gruppe (21) in der Verpackung (11) und die Vollständigkeit der Gruppe (21) von Produktgruppen (17) mittels einer zweiten Kontrolleinrichtung (56) erfasst wird, **gekennzeichnet durch** folgende Merkmale:
a) die Zuführung von Gruppen (21) zur Verpackung (11) wird gegebenenfalls wiederholt, bis eine vorgesehene Anzahl von Gruppen (21) in die Verpackung (11) eingefüllt wurde, die einer Sollmenge an Gruppen (21) bzw. Produktgruppen (17) in der Verpackung (11) entspricht, wobei das Vorhandensein jeder Gruppe (21) bzw. Produktgruppe (17) in der Verpackung (11) jeweils mittels der zweiten Kontrolleinrichtung (56) erfasst und dokumentiert wird,
b) die zweite Kontrolleinrichtung (56) ist im Bereich des Transportwegs der Gruppe (21) in die Verpackung (11) positioniert und erfasst nach Zufuhr einer Gruppe (21) in die Verpackung (11) dieselbe, wobei die Kontrolleinrichtung (56), vorzugsweise eine Kamera, im Bereich einer Transportbahn (57) für die Produkte (10) angeordnet ist und nach Transport der Gruppe (21) in die Verpackung (11) aus einer unterhalb der Transportbahn (57) angeordneten Wartestellung in eine oberhalb der Transportbahn (57) angeordnete Erfassungsstellung bewegt wird, zum Erfassen der Gruppe (21) in der Verpackung (11), und dass die Kontrolleinrichtung (56) danach zurück in die Wartestellung bewegt wird zur Zufuhr einer weiteren Gruppe (21) in die Verpackung (11).

2. Verfahren nach Anspruch 1, **dadurch gekennzeichnet, dass** die Vollständigkeit der Produktgruppe (17) im Bereich der Handhabungseinrichtung (18) geprüft wird, wobei das Vorhandensein einzelner Produkte (10) innerhalb der Produktgruppe (17) durch sowohl pneumatisch arbeitende Mittel als auch durch mechanisch arbeitende Mittel geprüft wird.

3. Verfahren nach Anspruch 2, **dadurch gekennzeichnet, dass** die pneumatisch arbeitenden Mittel und die mechanisch arbeitenden Mittel der Handhabungseinrichtung (18) zugeordnet sind, wobei zwecks pneumatischer Kontrolle des Vorhandenseins jedes Produkts (10) innerhalb der Produktgruppe (17) dieses über eine Unterdruckquelle mit einem Unterdruck beaufschlagt wird, wobei der Unterdruck durch ein Ansaugelement (39) aus einem porösen Material hindurch jeweils auf die Produkte (10) ausgeübt wird.

4. Vorrichtung zum Befüllen von Verpackungen (11) mit Produkten (10). insbesondere zum Befüllen von Kartons (13) mit Gebindepackungen (12) aus Zigarettenpackungen, mit einer ersten Kontrolleinrichtung (32) zum Erfassen der Vollständigkeit mehrerer Produkte (10) innerhalb einer Produktgruppe (17), und mit einer Handhabungseinrichtung (18) zum Zusammenstellen mehrerer Produktgruppen (17) zu einer Gruppe (21) von Produktgruppen (17) und zum Einführen der Gruppe (21) von Produktgruppen (17) in die Verpackung (11), und mit einer zweiten Kontrolleinrichtung (56) zum Erfassen des Vorhandenseins der Gruppe (21) in die Verpackung (11) und der Vollständigkeit der Gruppe (21) von Produktgruppen (17), **dadurch gekennzeichnet, dass** die Gruppen (21) von Produktgruppen (17) auf einer Transportbahn (57) ruhen und entlang dieser durch die Handhabungseinrichtung (18) in eine bereitgehaltene Verpackung (11) abschiebbar sind, wobei im Bereich der Transportbahn (57) die zweite Kontrolleinrichtung (56) angeordnet ist, derart, dass die Kontrolleinrichtung (56), vorzugsweise eine Kamera, nach einem Transport einer Gruppe (21) in die Verpackung (11) aus einer unterhalb der Transportbahn (57) angeordneten Wartestellung in eine oberhalb der Transportbahn (57) angeordnete Erfassungsstellung bewegbar ist, zum Erfassen der Gruppe (21) in der Verpackung (11) und dass die Kontrolleinrichtung (56) danach zurück in die Wartestellung bewegbar ist zur Zufuhr einer weiteren Gruppe (21) in die Verpackung (11).

5. Vorrichtung nach Anspruch 4, **dadurch gekennzeichnet, dass** die erste Kontrolleinrichtung (32) der Handhabungseinrichtung (18) zugeordnet ist, wobei die Handhabungseinrichtung (18) sowohl pneumatisch arbeitende Mittel als auch mechanisch arbeitende Mittel zur Prüfung der Vollständigkeit der Produktgruppe (17) aufweist.

6. Vorrichtung nach Anspruch 5, **dadurch gekennzeichnet, dass** die Handhabungseinrichtung (18) durch einen Roboter (19) gebildet ist, wobei der Roboter (19) einen Kopf (31) zum Handhaben der Produktgruppen (17) bzw. Gruppen (21) aufweist und die pneumatisch arbeitenden Mittel und die mechanisch arbeitenden Mittel dem Kopf (31) zugeordnet sind.

7. Vorrichtung nach Anspruch 5 oder einem der weiteren vorhergehenden Ansprüche, **dadurch gekennzeichnet, dass** die pneumatisch arbeitenden Mittel zur Übertragung eines Unterdrucks auf die Produktgruppe (17) ausgebildet ist, wobei der Unterdruck durch ein im Bereich des Kopfes (31) angeordnetes Ansaugelement (39) aus einem porösen Material hindurch auf die Produktgruppe (17) ausübbar ist.

## Claims

1. A method for filling packs (11) with products (10), in particular for filling boxes (13) with multipacks (12) made up of cigarette packs, wherein several products (10) are put together to form a product group (17) and the completeness of the product group (17) is detected by a first control device (32) outside of the pack (11), and wherein several product groups (17) are put together by means of a handling device (18) to form a group (21) of product groups (17) and are inserted into the pack (11), wherein the presence of the group (21) in the pack (11) and the completeness of the group (21) of product groups (17) is detected by means of a second control device (56), **characterized by** the following features:
a) the feeding of groups (21) to the pack (11) is repeated where necessary until a provided number of groups (21) have been filled into the pack (11) which corresponds to a required quantity of groups (21) or product groups (17) in the pack (11), wherein the presence of each group (21) or product group (17) in the pack (11) is detected and documented in each case by means of the second control device (56).
b) the second control device (56) is positioned in the region of the conveying path of the group (21) into the pack (11) and once a group (21) has been supplied into the pack (11) detects said group, wherein the control device (56), preferably a camera, is arranged in the region of a conveying track (57) for the products (10) and after the group (21) has been conveyed into the pack (11) is moved out of a waiting position which is arranged below the conveying track (57) into a detecting position which is arranged above the conveying track (57), for detecting the group (21) in the pack (21), and in that the control device (56) is then moved back into the waiting position for feeding a further group (21) into the pack (11).

2. The method as claimed in claim 1, **characterized in that** the completeness of the product group (17) is tested in the region of the handling device (18), wherein the presence of individual products (10) inside the product group (17) is tested by both pneumatically operating means and by mechanically operating means.

3. The method as claimed in claim 2, **characterized in that** the pneumatically operating means and the mechanically operating means are associated with the handling device (18), wherein for the purpose of controlling the presence of each product (10) inside the product group (17) in a pneumatic manner, said product is acted upon with a negative pressure by means of a negative pressure source, wherein the negative pressure is exerted onto the products (10) in each case through a porous material by a suction element (39).

4. An apparatus for filling packs (11) with products (10), in particular for filling boxes (13) with multi-packs (12) made up of cigarette packs, having a first control device (32) for detecting the completeness of several products (10) inside a product group (17), and having a handling device (18) for putting together several product groups (17) to form a group (21) of product groups (17) and for inserting the group (21) of product groups (17) into the pack (11), and having a second control device (56) for detecting the presence of the group (21) in the pack (11) and the completeness of the group (21) of product groups (17), **characterized in that** the groups (21) of product groups (17) rest on a conveying track (57) and are displaceable along said track by the handling device (18) into a pack (11) that is held in readiness, wherein the second control device (56) is arranged in the region of the conveying track (57) in such a manner that the control device (56), preferably a camera, once a group (21) has been conveyed into the pack (11), is movable from a waiting position that is arranged below the conveying track (57) into a detecting position that is arranged above the conveying track (57) for detecting the group (21) in the pack (11) and **in that** the control device (56) is then movable back into the waiting position for feeding a further group (21) into the pack (11).

5. The apparatus as claimed in claim 4, **characterized in that** the first control device (32) is associated with the handling device (18), wherein the handling device (18) comprises both pneumatically operating means and mechanically operating means for testing the completeness of the product group (17).

6. The apparatus as claimed in claim 5, **characterized in that** the handling device (18) is formed by a robot (19), wherein the robot (19) comprises a head (31) for handling the product groups (17) or groups (21) and the pneumatically operating means and the mechanically operating means are associated with the head (31).

7. The apparatus as claimed in claim 5 or in one of the further preceding claims, **characterized in that** the pneumatically operating means is realized for transferring a negative pressure to the product group (17), wherein the negative pressure is exertable onto the product group (17) through a porous material by a suction element (39) which is arranged in the region of the head (31).

## Revendications

1. Procédé pour le remplissage d'emballages (11) avec des produits (10), en particulier pour le remplissage de cartons (13) avec des cartouches (12) de paquets de cigarettes, dans lequel on rassemble plusieurs produits (10) en un groupe de produits (17) et on vérifie que le groupe de produits (17) est complet au moyen d'un premier dispositif de contrôle (32) à l'extérieur de l'emballage (11), et dans lequel on rassemble plusieurs groupes de produits (17) au moyen d'un dispositif de manutention (18) en un groupe (21) de groupes de produits (17) et on les introduit dans l'emballage (11), dans lequel on détecte la présence du groupe (21) dans l'emballage (11) et le caractère complet du groupe (21) de groupes de produits (17) au moyen d'un second dispositif de contrôle (56), **caractérisé par** les caractéristiques suivantes:
a) on répète éventuellement l'ajout de groupes (21) à l'emballage (11), jusqu'à ce qu'un nombre prévu de groupes (21) ait été introduit dans l'emballage (11), qui correspond à une quantité théorique de groupes (21) ou de groupes de produits (17) dans l'emballage (11), dans lequel on détecte et on consigne la présence de chaque groupe (21) ou groupe de produits (17) dans l'emballage (11) respectivement au moyen du second dispositif de contrôle (56),
b) le second dispositif de contrôle (56) est positionné dans la région du chemin de transport du groupe (21) dans l'emballage (11) et détecte un groupe (21) après l'ajout de celui-ci dans l'emballage (11), dans lequel le dispositif de contrôle (56), de préférence une caméra, est disposé dans la région d'une bande de transport (57) pour les produits (10) et, après le transport du groupe (21) dans l'emballage (11), est déplacé d'une position d'attente disposée en dessous de la bande de transport (57) à une position de détection disposée au-dessus de la bande de transport (57), pour détecter le groupe (21) dans l'emballage (11), et en ce que le dispositif de contrôle (56) est ensuite ramené de nouveau dans la position d'attente pour l'ajout d'un autre groupe (21) dans l'emballage (11).

2. Procédé selon la revendication 1, **caractérisé en ce que** l'on vérifie le caractère complet du groupe de produits (17) dans la région du dispositif de manutention (18), dans lequel on vérifie la présence de produits individuels (10) à l'intérieur du groupe de produits (17) aussi bien par des moyens opérant de façon pneumatique que par des moyens opérant de façon mécanique.

3. Procédé selon la revendication 2, **caractérisé en ce que** les moyens opérant de façon pneumatique et les moyens opérant de façon mécanique sont associés au dispositif de manutention (18), dans lequel pour le contrôle pneumatique de la présence de chaque produit (10) à l'intérieur du groupe de produits (17) on soumet celui-ci à une dépression au moyen d'une source de dépression, dans lequel on exerce la dépression respectivement sur les produits (10) à travers un élément d'aspiration (39) en un matériau poreux.

4. Dispositif pour le remplissage d'emballages (11) avec des produits (10), en particulier pour le remplissage de cartons (13) avec des cartouches (12) de paquets de cigarettes, avec un premier dispositif de contrôle (32) pour détecter le caractère complet de plusieurs produits (10) à l'intérieur d'un groupe de produits (17), et avec un dispositif de manutention (18) pour rassembler plusieurs groupes de produits (17) en un groupe (21) de groupes de produits (17) et pour introduire le groupe (21) de groupes de produits (17) dans l'emballage (11), et avec un second dispositif de contrôle (56) pour détecter la présence du groupe (21) dans l'emballage (11) et le caractère complet du groupe (21) du groupe de produits (17), **caractérisé en ce que** les groupes (21) de groupes de produits (17) reposent sur une bande transporteuse (57) et peuvent être déchargés le long de celle-ci au moyen du dispositif de manutention (18) dans un emballage préparé (11), dans lequel le second dispositif de contrôle (56) est disposé dans la région de la bande transporteuse (57), de telle manière que le dispositif de contrôle (56), de préférence une caméra, après un transport d'un groupe (21) dans l'emballage (11), soit déplaçable d'une position d'attente disposée en dessous de la bande transporteuse (57) à une position de détection disposée au-dessus de la bande transporteuse (57), pour la détection du groupe (21) dans l'emballage (11), et que le dispositif de contrôle (56) soit ensuite de nouveau déplaçable dans la position d'attente pour l'ajout d'un autre groupe (21) dans l'emballage (11).

5. Dispositif selon la revendication 4, **caractérisé en ce que** le premier dispositif de contrôle (32) est associé au dispositif de manutention (18), dans lequel le dispositif de manutention (18) présente aussi bien des moyens opérant de façon pneumatique que des moyens opérant de façon mécanique pour vérifier que le groupe de produits (17) est complet.

6. Dispositif selon la revendication 5, **caractérisé en ce que** le dispositif de manutention (18) est formé par un robot (19), dans lequel le robot (19) présente une tête (31) pour la manutention des groupes de produits (17) ou des groupes (21) et les moyens opérant de façon pneumatique et les moyens opérant de façon mécanique sont associés à la tête (31).

7. Dispositif selon la revendication 5 ou l'une quelconque des autres revendications précédentes, **caractérisé en ce que** les moyens opérant de façon pneumatique sont conçus pour la transmission d'une dépression au groupe de produits (17), dans lequel la dépression peut être exercée sur le groupe de produits (17) à travers un élément d'aspiration (39) en un matériau poreux disposé dans la région de la tête (31).
